# EUROPEAN PATENT APPLICATION

(11) **EP 3 872 027 A1**
(43) Date of publication of application: **01.09.2021**
(21) Application number: 21159300.9
(22) Date of filing: 25.02.2021
(51) Int. Cl.: B66F 15/00

(54) **ARTICLE MANOEUVRING ASSEMBLY AND ARTICLE LIFTING DEVICE**

(30) Priority: 26.02.2020 US 202062981565 P
(71) Applicant: DOZOP HOLDINGS LLC, Brooklyn, NY 11219 (US)
(72) Inventor: Thaler, Menachem, 2660 Hoboken (BE); Buttazzoni, Luca, 038987 Singapore (SG)
(74) Representative: Sach, Greg Robert

(57) **Abstract**

An article lifting device (100) for lifting articles (A) to be maneuvered is provided. The article lifting device includes at least two plane faces (110, 120); at least one curved face (130); and at least one extension member (140). The at least two plane faces include a first plane face having opposite ends; a second plane face having opposite ends. The first and second plane faces are coupled to each other from one of the respective ends of the first and second faces. The at least one curved face is coupled to the respective opposite ends of the first and second plane faces. The at least one extension member may extend from at least one end of the at least one curved face. Further, an article lifting assembly (100) is also provided that includes article lifting device and at least one stopper member (200).

## Description

### CROSS REFERENCE TO RELATED APPLICATIONS

The present invention claims priority under 35 United States Code, Section 119 on the provisional application numbered 62/981,565 filed on 02/26/2020, the disclosure of which is incorporated by reference.

### FIELD OF THE DISCLOSURE

The present invention relates to lifting or maneuvering systems, and, more particularly, to a lifting and manoeuvring device or assembly for lifting and manoeuvring articles from one place to another.

### BACKGROUND OF THE DISCLOSURE

Maneuvering articles in various places, such as in warehouses, inventory storage, retail houses is a daily task, and often requires one or more person to maneuver such articles from one place to another. The process becomes laborious and more difficult when it is to be executed by a single person. Now a days, manoeuvring articles from one place to another is a significant step in supply chain and that is why has been a field of constant innovation. Specifically, in the process of manoeuvring articles, a user usually requires loading the articles carefully from one place, such as, any storage place in houses or shops, on a suitable transporting means, such as transporting trolleys, move the articles on the transporting trolleys, and, finally, unload the article from the transporting trolleys at a desired location. More often than not, the user requires an article manoeuvring device, which may exhibit characteristics like easy portability, operability, and so forth. There are several conventional manoeuvring devices available today, which are capable of manoeuvring the article.

Conventional article manoeuvring devices may be effective in meeting various requirements but may not be able to address some of the specific problems. For example, the conventional article manoeuvring devices may not be effective for transportation carried out by a single person and may often require more than one person. Conventional manoeuvring devices that are available and can be used by a single person are huge, bulky and requires a lot of storage space for storing thereto. Some example of such conventional manoeuvring devices are forklifts, cranes, and so forth. Further, such conventional manoeuvring devices may not be suitable for manoeuvring relatively smaller items in confined or compact spaces.

For manoeuvring such articles in confined or compact spaces there are various conventional article manoeuvring devices, such as pallets and so forth. However, such article manoeuvring devices may not be effort sensitive. As a result, the conventional article manoeuvring devices may require lots of human effort to load, unload and transport the article during manoeuvring the article. For example, such conventional article manoeuvring devices may be heavy and not easy to be portable to carry easily from one place another. As a result, the conventional article manoeuvring devices may require extra manpower and hassle to carry the conventional article manoeuvring devices itself before and after manoeuvring the article.

Further, conventional article manoeuvring devices, such as pallets, may also requires additional labors for loading and unloading the articles on the pallets for moving from one place to another. Additionally, during loading and unloading of the articles on the pallets by labors, there are maximum chances of the articles being mishandled. As a result, the articles to be transported on the conventional article manoeuvring devices, such as pallets without any suitable means to load and unload the articles may get break or distorted while loading and unloading the articles.

Accordingly, there exists a need to overcome various existing problems related to the conventional article manoeuvring devices. For example, there may be a need for an article manoeuvring device that may be capable of being used with significantly less involvement of the human for loading and unloading articles for making an effort sensitive system. Further, there may be a need of such article manoeuvring device that may itself be easily portable from one place to another place and may be used in confined or compact spaces. Furthermore, there is a need of such article manoeuvring device that may load and transport the article without experiencing impact on the articles while loading and unloading of the articles.

### SUMMARY OF THE DISCLOSURE

In view of the foregoing disadvantages inherent in the prior art, the general purpose of the present disclosure is to provide a lifting and manoeuvring device or system, to include all advantages of the prior art, and to overcome the drawbacks inherent in the prior art.

An object of the present disclosure is to provide an article manoeuvring device or system and related method to overcome various existing problems related to the conventional article manoeuvring device. For example, an object of the present disclosure is to provide an article manoeuvring device or assembly that may be capable of being used with significantly less involvement of the human effort for loading and unloading articles for making an effort sensitive system.

Further, another object of the present disclosure is to provide such an article manoeuvring device or assembly that may itself be easily portable from one place to another place and may be used in confined or compact spaces. For example, the article manoeuvring device or assembly may be small, light and handy to carry from one place to another without any hassle and effort.

Further, additional object of the present disclosure is to provide an article manoeuvring device or assembly that may load and transport the article without experiencing impact. For example, the article manoeuvring device may enable relatively less impact while loading and unloading of the article for manoeuvring the article from one place to another place.

Furthermore, an object of the present disclosure is to provide a method for manoeuvring articles using an article manoeuvring device or assembly.

In light of the above objects, in one aspect of the present disclosure, an article manoeuvring assembly for manoeuvring an article via a transporting trolly is provided. The article manoeuvring assembly may include: at least one article lifting device and at least one stopper member. In one example arrangement, the article lifting device may include at least two plane faces; at least one curved face; and at least one extension member. The at least two plane faces may include a first plane face having opposite ends; and a second plane face having also opposite ends. The first and second plane faces may be coupled to each other from one of the respective ends of the first and second faces. The at least one curved face may be coupled to the respective opposite ends of the first and second plane faces. Further, the at least one extension member may extend from at least one end of the at least one curved face. Further, in one example arrangement, the at least one stopper member may be operationally coupled to the article lifting device and the transporting trolly to keep the transporting trolly in a static position while the article lifting device lifts the articles.

In one embodiment, the first and second plane faces may be perpendicularly coupled to each other from one of the respective ends of the first and second plane faces.

In one embodiment, the at least one extension member may extend from at least from one joining junction of the at least two plane faces and the at least one curved face to be aligned parallel to a line of plane on which the articles are kept for lifting.

In one embodiment, the at least one curved face may be coupled to the respective opposite ends of the first and second plane faces to be aligned substantially diagonally to the at least two plane faces.

In one embodiment, the at least two plane faces and the at least one curved face may be coupled to define a cavity therebetween. In one example, the cavity may be a through cavity. In another example, the cavity may be a covered cavity.

In one embodiment, the at least one stopper member may include two plane faces and a curved face coupled to each other. In one example embodiment, the at least one stopper member may be accommodated in the cavity for safekeeping the at least one stopper member.

In one aspect of the present disclosure, an article lifting device for lifting articles to be maneuvered is provided. The article lifting device may include at least two plane faces; at least one curved face; and at least one extension member. The at least two plane faces may include a first plane face having opposite ends; a second plane face having opposite ends. The first and second plane faces may be coupled to each other from one of the respective ends of the first and second faces. The at least one curved face may be coupled to the respective opposite ends of the first and second plane faces. Further, the at least one extension member may extend from at least one end of the at least one curved face.

In one embodiment, the first and second plane faces may be perpendicularly coupled to each other from one of the respective ends of the first and second plane faces.

In one embodiment, the at least one extension member may extend from at least one joining junction of the at least two plane faces and the at least one curved face may be aligned parallel to a line of plane on which the articles are kept for lifting.

In one embodiment, the at least one curved face may be coupled to the respective opposite ends of the first and second plane faces to be aligned substantially diagonally to the at least two plane faces.

In one embodiment, the at least two plane faces and the at least one curved face may be coupled to define a cavity therebetween. The cavity may be a through cavity.

In one embodiment, the article lifting device may further includes a slippage protection arrangement coupled to an outer surface of the at least one curved face.

In one embodiment, a method for manoeuvring an article via a transporting trolly through a door is provided. The method includes: engaging at least one article lifting device to a bottom of the article, the article lifting device may comprising at least two plane faces, at least one curved face, and at least one extension member, wherein the at least one extension member of the at least one article lifting device is engaged to a bottom of the article such that the at least one extension member is aligned parallel to a line of plane on which the article is kept; placing at least one stopper member along at least one wheel of the transporting trolley for restricting movement of the transporting trolly; and pushing the article from a top portion thereof, engaged with the at least one extension member of the slider member, to enable rotation of the at least one curved face of the article lifting device on the resting ground to rotationally lift the article from the resting ground and place on the transporting trolley.

In one embodiment, the method further includes placing at least one stopper member along the door to restrict movement of the door.

This together with the other aspects of the present disclosure, along with the various features of novelty that characterize the present disclosure, is pointed out with particularity in the claims annexed hereto and forms a part of the present disclosure. For a better understanding of the present disclosure, its operating advantages, and the specified object attained by its uses, reference should be made to the accompanying drawings and descriptive matter in which there are illustrated exemplary embodiments of the present disclosure.

### BRIEF DESCRIPTION OF THE DRAWINGS

The advantages and features of the present disclosure will become better understood with reference to the following detailed description taken in conjunction with the accompanying drawing, in which:
FIGS. 1A and 1B illustrate perspective views from two different positions of an article manoeuvring assembly depicting various parts associated therewith, in accordance with an exemplary embodiment of the present disclosure;
FIG. 2 illustrates a side view of the article manoeuvring assembly, in accordance with an exemplary embodiment of the present disclosure;
FIGS. 3A illustrates an article manoeuvring device of an article manoeuvring assembly, in accordance with an exemplary embodiment of the present disclosure;

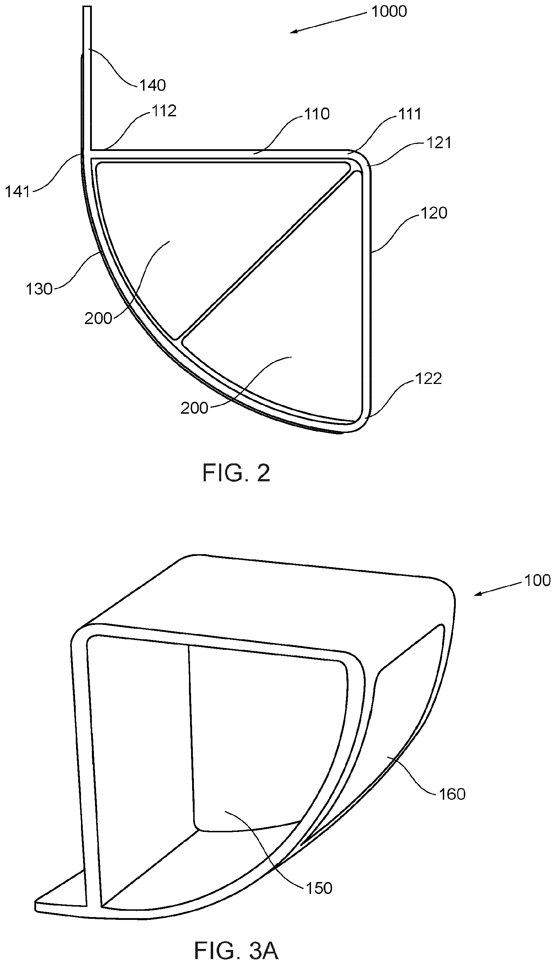

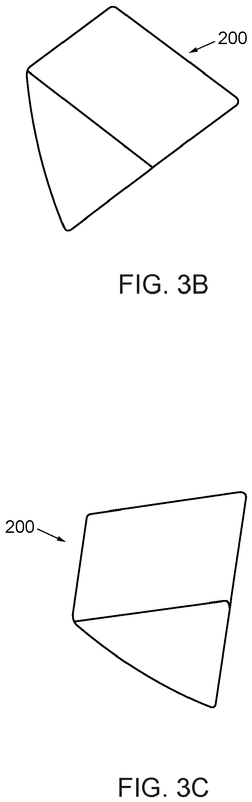

FIGS. 3A, 3B and 3C illustrate stopper members of an article manoeuvring assembly, in accordance with an exemplary embodiment of the present disclosure; and

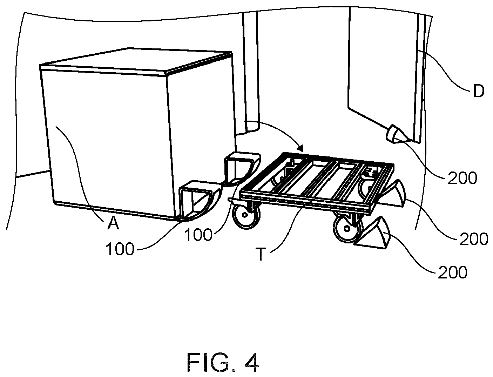

FIG. 4 illustrates an environment depicting an article manoeuvring assembly in utilized state, in accordance with an exemplary embodiment of the present disclosure.

Like reference numerals refer to like parts throughout the description of several views of the drawing.

### DETAILED DESCRIPTION OF THE DISCLOSURE

The exemplary embodiments described herein detail for illustrative purposes are subject to many variations in implementation. The present disclosure provides a wall-climbing toy vehicle. It should be emphasized, however, that the present disclosure is not limited only to what is disclosed and extends to cover various alternation to the wall-climbing toy vehicle. It is understood that various omissions and substitutions of equivalents are contemplated as circumstances may suggest or render expedient, but these are intended to cover the application or implementation without departing from the spirit or scope of the present disclosure.

The terms "a" and "an" herein do not denote a limitation of quantity, but rather denote the presence of at least one of the referenced items.

The terms "having", "comprising", "including", and variations thereof signify the presence of a component.

In one aspect of the present disclosure, an article manoeuvring assembly for manoeuvring an article via a transporting trolly is provided. The article manoeuvring assembly includes: at least one article lifting device and at least one stopper member. In one example arrangement, the article lifting device includes at least two plane faces; at least one curved face; and at least one extension member. The at least two plane faces include a first plane face having opposite ends; a second plane face having opposite ends. The first and second plane faces are coupled to each other from one of the respective ends of the first and second faces. The at least one curved face is coupled to the respective opposite ends of the first and second plane faces. Further, the at least one extension member extends from at least one end of the at least one curved face. Further, in one example arrangement, the at least one stopper member is operationally coupled to the article lifting device and the transporting trolly to keep the transporting trolly in a static position while the article lifting device lifts the articles.

In one aspect of the present disclosure, an article lifting device for lifting articles to be maneuvered is provided. The article lifting device includes at least two plane faces; at least one curved face; and at least one extension member. The at least two plane faces include a first plane face having opposite ends; a second plane face having opposite ends. The first and second plane faces are coupled to each other from one of the respective ends of the first and second faces. The at least one curved face is coupled to the respective opposite ends of the first and second plane faces. Further, the at least one extension member extends from at least one end of the at least one curved face.

In one embodiment, a method for manoeuvring an article via a transporting trolly through a door is provided. The method includes: engaging at least one article lifting device to a bottom of the article, the article lifting device comprising at least two plane faces, at least one curved face, and at least one extension member, wherein the at least one extension member of the at least one article lifting device is engaged to a bottom of the article such that the at least one extension member is aligned parallel to a line of plane on which the article is kept; placing at least one stopper member along at least one wheel of the transporting trolley for restricting movement of the transporting trolly; and pushing the article from a top portion thereof, engaged with the at least one extension member of the slider member, to enable rotation of the at least one curved face of the article lifting device on the resting ground to rotationally lift the article from the resting ground and place on the transporting trolley.

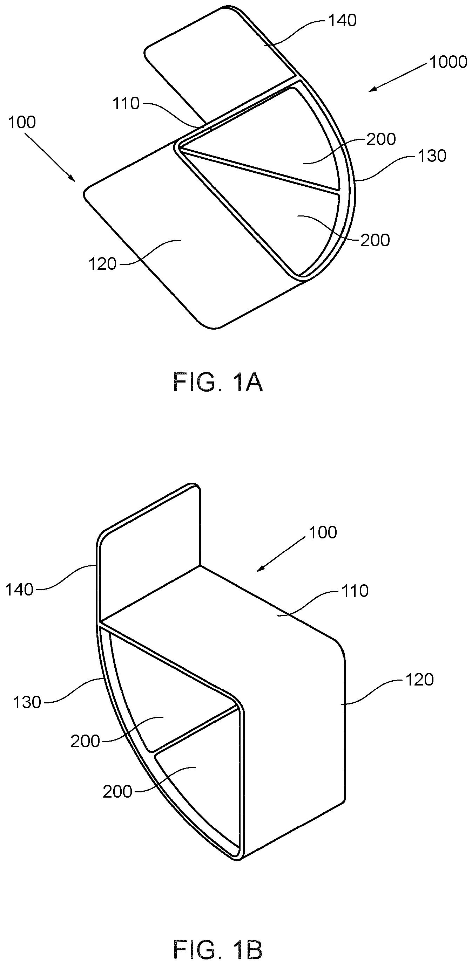

An article manoeuvring assembly 1000 will now be described in conjunction with FIGS. 1A to 4, in accordance with an exemplary embodiment of the present disclosure. FIGS. 1A to 3C illustrate various views and associated components of the article manoeuvring assembly 1000 illustrates an environment, whereby the article manoeuvring assembly 1000 is shown in utilized state for manoeuvring an article 'A' via a transporting trolly 'T' along a door 'D'.

Referring now to FIGS. 1A to 3C, the article manoeuvring assembly 1000 for manoeuvring an article 'A' via a transporting trolly 'T' is provided. The article manoeuvring assembly 1000 includes at least one article lifting device 100 and at least one stopper member 200.

In one example arrangement, the article lifting device 100 may include at least two plane faces 110, 120; at least one curved face 130; and at least one extension member 140. The at least two plane faces include a first plane face 110 having opposite ends 111, 112; and a second plane face 120 having opposite ends 121, 122. As shown in FIG. 2, the first and second plane faces 110, 120 may be coupled to each other from one of the respective ends 111, 121 of the first and second faces 110, 120. In one example embodiment, the first and second plane faces 110, 120 may be perpendicularly coupled to each other from one of the respective ends 111, 121 of the first and second plane faces 110, 120. However, without departing from the scope of the present disclosure, the first and second plane faces 110, 120 may be coupled to each other in any other orientation from one of the respective ends 111, 121 of the first and second plane faces 110, 120. In one arrangement, two plane faces 110, 120 may be formed by two rectangular pieces made of hard materials, such as, one or other metals, to withstand load of various articles that are to be lifted and maneuvered from one place to another place using the article lifting device 100. Such rectangular pieces may be preferably, without limiting, be of a flat configuration.

Further, the at least one curved face 130 may be coupled to the first plane face 110 and the second plane face 120. Specifically, as shown in FIG. 2, the at least one curved face 130 may be coupled to the respective opposite ends 112, 122 of the first and second plane faces 110, 120. In one embodiment, the at least one curved face 130 may be coupled to the respective opposite ends 112, 122 of the first and second plane faces 110, 120 to be aligned substantially diagonally to the at least two plane faces 110, 120. In one arrangement, the at least one curved face 130 may be formed by a curved rectangular piece made of hard materials, such as, one or other metals, to withstand load of various articles that are to be lifted and maneuvered from one place to another place using the article lifting device 100. Such rectangular pieces may be preferably, without limiting, be of a curved configuration.

In one embodiment, the at least two plane faces 110, 120 and the at least one curved face 130 may be coupled to define a cavity 150 therebetween, as shown in FIG. 3A. In one example, the cavity 150 may be a through cavity. In another example, the cavity 150 may be a covered cavity, which may be covered using suitable flat structure along one side of the cavity 150. The stopper members 150 may be accommodated in the article lifting device 100 that makes the article manoeuvring assembly compact when not in use. The stopper members 150 may be taken out of the article lifting device 100 upon requirement. The article lifting device 100 may be useful in loading the article 'A' on the transporting trolly 'T', while manoeuvring the article 'A' via the article lifting device 100.

Further, the at least one extension member 140 may extend from at least one end of the at least one curved face 130. For example, as shown in FIG. 2, the at least one extension member 140 may extend from at least from one joining junction 141 of the at least two plane faces 110, 120 and the at least one curved face 130 to be aligned parallel to a line of plane on which the articles 'A' are kept for lifting. In one arrangement, extension member 140 may be formed by a rectangular piece made of hard materials, such as, one or other metals, to withstand load of various articles that are to be lifted and maneuvered from one place to another place using the article lifting device 100. Such rectangular pieces may be preferably, without limiting, be of a flat configuration.

In one embodiment, as shown in FIG. 3A, the article lifting device 100 may include a slippage protection arrangement 160 coupled to an outer surface of the at least one curved face 130. As shown in example FIG. 3A, the slippage protection arrangement 160 may be a slippage protection strip that may act as anti-friction element and prevent skidding of the article lifting device 100 while the article lifting device 100 is in use.

Further, as shown in FIGS. 1A to 2, and 3B and 3C, in one example arrangement, the at least one stopper member 200 may be operationally coupled to the article lifting device 100 and the transporting trolly 'T' to keep the transporting trolly 'T' in a static position while the article lifting device lifts the articles 'A'. In one embodiment, as shown in FIGS. 1A to 2, the at least one stopper member 200 is accommodated in the cavity 150 for safekeeping the at least one stopper member 200. As shown in FIGS. 1A to 2, two stopper member 200 are shown to in accommodated in the cavity 150, whoever, such cavity 150 may accommodate one or more than two stopper members 200 without departing from the scope of the present disclosure.

In one example embodiment, the at least one stopper member 200 may include two plane faces and a curved face coupled to each other. The stopper member 200, as shown in various figures may be a triangular shaped structure. However, without departing from the scope of the present disclosure the stopper member 200 may of any shape and size as far as it meets the basic requirement of stopping the transporting trolly 'T' or the door 'D', while the article lifting device 100 is in use. Further, the article lifting device 100 and the stopper member 200 may be made of any size to accommodate the articles 'A' of various shape and side, and that the stopper member 200 may complement the shape and size of the article lifting device 100 so that the stopper member 200 may be accommodated in the cavity 150 of the the article lifting device 100.

Referring now to FIG. 4, a method for manoeuvring the article 'A' via the transporting trolly 'T' through the door 'D' may be described in conjunction with FIGS. 1A to 3, in accordance with an exemplary embodiment of the present disclosure. In one embodiment, the method may include engaging at least one article lifting device 100 to a bottom of the article 'A' such that the at least one extension member 140 is aligned parallel to a line of plane on which the article 'A' is kept. As shown in FIG. 4, two article lifting device 100 are engaged at the bottom corners of the article "A that is to be transported. The extension members 140 of each of the article lifting device 100 may be inserted between the article's 'A' bottom face and the resting ground, over which the article 'A' rests. Further, the transporting trolley 'T' is seen kept beside of the article 'A' that is to be transported.

The method may further include placing at least one stopper member 200 along at least one wheel of the transporting trolley 'T' for restricting movement of the transporting trolly 'T'. The stopper member 200 may be placed along front or rear wheel which may stop the wheel movement and keeps the transporting trolley in static position. Stopping the wheel movement may facilitate hassle free loading and unloading of the article 'A', to and from the transporting trolley 'T'. The stopper member 200 may also be used to keep the door 'D' open while manoeuvring the article from the room. As shown in example FIG. 4, two stopper members 200 are engaged along each rear wheels of the transporting trolley 'T' to stop the movement of the transporting trolley 'T'. Further shown is one stopper member 200 kept along the door 'D' to stop the movement of the door 'D' while manoeuvring the article from the room using the transporting trolley 'T'. Further, there may be an environment or room which may not include door such as the door 'D', and in such environment, no such stopper member 200 be used. Numbers of the stopper member 200, as shown in FIG. 4, are only for the purpose of illustration and understanding of the invention and shall not considered to be limiting in any manner.

The method may further include pushing the article 'A' from a top portion thereof, engaged with the at least one extension member 140 of the slider member, to enable rotation of the at least one curved face 130 of the article lifting device 100 on the resting ground to rotationally lift the article 'A' from the resting ground and place on the transporting trolley 'T'. The user may push the article 'A' towards the transporting trolley 'T', with the desired force. Pushing the article 'A', engaged with the article lifting device 100, enable the gradual loading of the article 'A' over the transporting trolley 'T'. The gradual loading may be possible due to the rotation of the curved face 130 of the article lifting device 100 over the resting ground. The pushing action of the article 'A' engaged with the article lifting device 100 may eradicate the step of picking and placing the article 'A' over the transporting trolley 'T', this in turn saves lot of human effort and energy. Furthermore, once the article 'A' is placed or loaded over the transporting trolley 'T', the transporting trolley 'T' may be manoeuvred to move the articles 'A' from one place to another place.

The present disclosure is advantageous in providing the article manoeuvring assembly 1000 that may have been created and perfected various prototypes in determining the ideal form, format, and manufacturing materials and subsequently conducted experimentation of the prototypes in controlled circumstances. After eliminating a few potential manufacturing materials, designs and methods, the present article manoeuvring assembly 1000 identified the best-suited material, which proved to be economical, sturdy and flexible to obtain the article manoeuvring assembly. Similarly, the article manoeuvring assembly of the invention and overall design thereof underwent several iterations, in order to accomplish functional, comfortable, economical, simple, easy-to-use design, which further featured universal means of the article manoeuvring assembly in such a way that it may be capable of being used effectively. The present disclosure provides an article manoeuvring assembly that may be capable of being used with significantly less involvement of the human for loading and unloading articles for making an effort sensitive system. Further, the present disclosure provides such article manoeuvring assembly that may be compact and be easily portable from one place to another place and may be used in confined or compact spaces. The article manoeuvring assembly of the present invention may be small, light and handy to carry from one place to another without any hassle and effort. Moreover, the present disclosure provides an article manoeuvring assembly that may load and transport the article without experiencing impact.

The foregoing descriptions of specific embodiments of the present disclosure have been presented for purposes of illustration and description. They are not intended to be exhaustive or to limit the present disclosure to the precise forms disclosed, and obviously many modifications and variations are possible in light of the above teaching. The embodiments were chosen and described in order to best explain the principles of the present disclosure and its practical application, and to thereby enable others skilled in the art to best utilize the present disclosure and various embodiments with various modifications as are suited to the particular use contemplated. It is understood that various omissions and substitutions of equivalents are contemplated as circumstances may suggest or render expedient, but such omissions and substitutions are intended to cover the application or implementation without departing from the spirit or scope of the present disclosure.

## Claims

1. An article manoeuvring assembly for manoeuvring an article via a transporting trolly, the article manoeuvring assembly comprising:
at least one article lifting device operationally coupled with the article for lifting the articles to be manoeuvred, the article lifting device, having:
at least two plane faces having,
a first plane face having opposite ends,
a second plane face having opposite ends, wherein the first and second plane faces are coupled to each other from one of the respective ends of the first and second faces,
at least one curved face coupled to the respective opposite ends of the first and second plane faces, and
at least one extension member extends from at least one end of the at least one curved face;
at least one stopper member operationally coupled to the article lifting device and the transporting trolly to keep the transporting trolly in a static position while the article lifting device lifts the articles.

2. The article manoeuvring assembly of claim 1, wherein the first and second plane faces are perpendicularly coupled to each other from one of the respective ends of the first and second plane faces.

3. The article manoeuvring assembly of claim 1, wherein the at least one extension member extends from at least from one joining junction of the at least two plane faces and the at least one curved face to be aligned parallel to a line of plane on which the articles are kept for lifting.

4. The article manoeuvring assembly of claim 1, wherein the at least one curved face coupled to the respective opposite ends of the first and second plane faces to be aligned substantially diagonally to the at least two plane faces.

5. The article manoeuvring assembly of claim 1, wherein the at least two plane faces and the at least one curved face are coupled to define a cavity therebetween, and wherein the at least one stopper member is accommodated in the cavity for safekeeping.

6. The article manoeuvring assembly of claim 1, wherein at least one stopper member comprises two plane faces and a curved face coupled to each other.

7. The article manoeuvring assembly of claim 1 further comprising a slippage protection arrangement coupled to an outer surface of the at least one curved face.

8. An article lifting device for lifting articles to be manoeuvred, the article lifting device, comprising:
at least two plane faces comprising:
a first plane face having opposite ends;
a second plane face having opposite ends, wherein the first and second plane faces are coupled to each other from one of the respective ends of the first and second faces;
at least one curved face coupled to the respective opposite ends of the first and second plane faces; and
at least one extension member extends from at least one end of the at least one curved face.

9. The article lifting device of claim 8, wherein the first and second plane faces are perpendicularly coupled to each other from one of the respective ends of the first and second plane faces.

10. The article lifting device of claim 8, wherein the at least one extension member extends from at least one joining junction of the at least two plane faces and the at least one curved face to be aligned parallel to a line of plane on which the articles are kept for lifting.

11. The article lifting device of claim 8, wherein the at least one curved face coupled to the respective opposite ends of the first and second plane faces to be aligned substantially diagonally to the at least two plane faces.

12. The article lifting device of claim 8, wherein the at least two plane faces and the at least one curved face are coupled to define a cavity therebetween.

13. The article lifting device of claim 8 further comprising a slippage protection arrangement coupled to an outer surface of the at least one curved face.

14. A method for manoeuvring an article via a transporting trolly through a door, the method comprising:
engaging at least one article lifting device to a bottom of the article, the article lifting device comprising at least two plane faces, at least one curved face, and at least one extension member, wherein the at least one extension member of the at least one article lifting device is engaged to a bottom of the article such that the at least one extension member is aligned parallel to a line of plane on which the article is kept;
placing at least one stopper member along at least one wheel of the transporting trolley for restricting movement of the transporting trolly;
pushing the article from a top portion thereof, engaged with the at least one extension member of the slider member, to enable rotation of the at least one curved face of the article lifting device on the resting ground to rotationally lift the article from the resting ground and place on the transporting trolley.

15. The method for manoeuvring of claim 14 further comprising placing at least one stopper member along the door to restrict movement of the door.
